**Europäisches Patentamt**

**European Patent Office**

**Office européen des brevets**

(19)

(11) Veröffentlichungsnummer: **0 305 361 B1**

(12)

# EUROPÄISCHE PATENTSCHRIFT

(45) Veröffentlichungstag der Patentschrift:
04.12.91 Patentblatt 91/49

(51) Int. Cl.$^5$: **B60R 22/46**

(21) Anmeldenummer: 87901016.3

(22) Anmeldetag: 31.01.87

(86) Internationale Anmeldenummer:
PCT/DE87/00034

(87) Internationale Veröffentlichungsnummer:
WO 87/05268 11.09.87 Gazette 87/20

(54) **ROTATORISCHE ANTRIEBSEINHEIT FÜR EINEN GURTSTRAMMER.**

(30) Priorität: 27.02.86 DE 3606346
01.09.86 DE 3629713

(43) Veröffentlichungstag der Anmeldung:
08.03.89 Patentblatt 89/10

(45) Bekanntmachung des Hinweises auf die
Patenterteilung:
04.12.91 Patentblatt 91/49

(84) Benannte Vertragsstaaten:
DE FR GB IT SE

(56) Entgegenhaltungen:
DE-A- 3 328 127
DE-A- 3 421 838
FR-A- 2 292 493

(73) Patentinhaber: **GENERAL ENGINEERING
(NETHERLANDS) B.V.
Maliebaan 74
NL-3581 CV Utrecht (NL)**

(72) Erfinder: **Ernst, Hans-Hellmut
Sommerterrasse 2
2070 Ahrensburg (DE)**

(74) Vertreter: **Lorenz, Eduard
Lorenz-Seidler-Gossel et al
Widenmayerstrasse 23
W-8000 München 22 (DE)**

## Beschreibung

Die Erfindung betrifft eine Antriebseinheit für einen Gurtstrammer, der nach Überschreiten einer vorgegebenen Verzögerungsschwelle ausgelöst wird und entweder pyrotechnisch oder mechanisch arbeitet. Sie kann in Kombination mit einem Aufroller oder auch allein für sich beliebig plaziert zwischen einem Aufroller und einem Umlenker arbeiten.

Bislang sind zwei Arten von Gurtstrammern mit praktischer Erprobung bekannt geworden. Die eine Art sind die sogenannten Seilstrammer, wie sie beispielsweise in der DE-PS 32 31 509 beschrieben werden. Dieser Art Gurtstrammer haften zwei Nachteile an. Zum einen greifen sie konstruktiv sehr stark in die Bauweise des Aufrollers ein. Es sind viele Zusatzteile am Aufroller erforderlich, um im Aktivierungsfall eine Rückdrehung der Gurtwelle zu bewirken. Auch wird die Sensormechanik des Aufrollers bei der Aktivierung übermäßig beansprucht, wie aus der DE-OS 33 38 187 hervorgeht. Schließlich baut dieser Strammer sehr groß. Auch als sogenannter Kurzhuber, wie er in der DE-PS 32 31 509 zur Reduzierung der Baulänge vorgeschlagen wird, ist noch ein relativ großer Einbauraum erforderlich. Seilstrammer bauen also recht groß und aufgrund des mechanischen Aufwandes sehr teuer.

Eine andere Art Strammer ist in der EP 0 138 507 bekannt geworden. Gegenüber den Seilstrammern zeichnen sie sich dadurch aus, daß sie unabhängig von Art und Bauweise des Aufrollers arbeiten, daß sie nicht in einer Baueinheit mit dem Aufroller kombiniert sein müssen, daß sie die Sensormechanik des Aufrollers nicht belasten und daß sie eine kürzere Baulänge aufweisen. Ein Nachteil dieser Strammerart kann darin gesehen werden, daß der Wirkungsgrad aufgrund der Gurtbandumschlingung mit zunehmendem Drehwinkel abnimmt. Eine Gurtstrammerlänge von 180 mm (als maximal mögliche Einzugslänge gewünscht) unter Last erfordert eine hochenergetische Treibladung.

Der Erfindung liegt nun die Aufgabe zugrunde, bei einem Gurtstrammer der eingangs angegebenen Art

a) die Verlustleistung durch Reibungseinflüsse zu reduzieren, das heißt, den Wirkungsgrad der Strammung zu verbessern,

b) das Bauvolumen bei gleichbleibender Gurteinzugslänge zu reduzieren, insbesondere die Baulänge,

c) die Kosten durch wenige und einfache Teile zu reduzieren.

Erfindungsgemäß wird diese Aufgabe durch den kennzeichnenden Teil des Anspruchs 1 gelöst, in dem eine in Gurtabzugsrichtung ortsfeste und in Rotationsrichtung abtreibbare walzenförmige Trommel mit einer griffigen Mantelfläche während des Strammvorganges das Gurtband gegen eine Gegendruckfläche preßt und das Gurtband durch direkte Übertragung einer rotatorischen Antriebsenergie über die Mantelfläche im Sinne einer Gurtstrammung einzieht. Es ist zwar schon aus der DE-A 3 328 127 eine rotatorische Antriebseinheit für einen Gurtstrammer bekannt, der nach Überschreiten einer vorgegebenen Verzögerungsschwelle ausgelöst wird und entweder pyrotechnisch oder mechanisch arbeitet, wobei eine weitgehend ortsfeste, rotierende, walzenförmige Trommel mit einer griffigen Mantelfläche im Aktivierungsfall das Gurtband gegen eine Gegendruckfläche preßt. In dieser Entgegenhaltung erfolgt die Gurtstrammung durch das lineare Verfahren einer Öse und dem daraus resultierenden schlaufenförmigen Gurtbandverlauf. Die walzenförmige Trommel dient hier lediglich zur zusätzlichen Vermeidung des sogenannten Filmspuleneffektes.

Weitere Einzelheiten und Vorteile der Erfindung ergeben sich aus den sich an den Hauptanspruch anschließenden Unteransprüchen.

Gemäß der vorliegenden Erfindung wirkt ein als Antriebstrommel nach dem Prinzip des Reibrades arbeitender Drehkolbenzylinder direkt im Aktivierungsfall auf das Gurtband ein. Dabei bleiben die inneren Reibungsverhältnisse und der interne Arbeitsaufwand unabhängig vom Drehwinkel nahezu konstant. Bei einem einfach wirkenden Drehzylinder mit einem möglichen Drehwinkel von ca. 300° ist bei 180 mm Gurteinzugslänge ein relativ großer Durchmesser der Antriebstrommel erforderlich. Hier stellt sich bezüglich der Baulänge gegenüber dem Stand der Technik nur eine Reduzierung von etwa 10 mm ein bei gleicher Bautiefe. Die Verbesserung des Strammwirkungsgrades ist aber erheblich, da über dem gesamten Drehwinkel die inneren Strammwiderstände nur linear zur Gurtstrammungskraft anwachsen.

Würde die Manteloberfläche der Antriebswalze aus Gummi bestehen, so daß die Gurteinzugskraft nur über Reibung zustande kommt, wäre der Abrollwiderstand relativ groß, da die Kraft der Andruckfeder sehr groß sein muß.

Bei einem formschlüssigen Transport des Gurtbandes mit Hilfe von Verzahnung auf der Mantelfläche der Antriebswalze läßt sich mit relativ schwachen Andruckfedern und somit relativ niedrigem Anpreßdruck eine hohe Gurteinzugskraft, die 1200 N erreichen soll, realisieren. Der Anpreßdruck wirkt sich direkt auf die Laufreibung des Drehzylinders in den Lagern aus. Über die Stärke der Andruckfedern läßt sich auf einfache Weise die Gurteinzugskraft begrenzen.

Eine signifikante Verkleinerung des Bauvolumens ist erreichbar, wenn ein in Reihe geschalteter Doppeldrehkolben, wie er in der DE-PS 25 10 514 beschrieben wird, zum Einsatz gelangt. Bei einem Drehwinkel von etwa 600° kann der Walzendurchmesser erheblich kleiner sein, um mit der Mantelfläche eine Abwicklungslänge von 180 mm zu realisieren.

Mit einer Einbuße der pryrotechnischen Strammleistung durch die Anordnung von 2 Brennkammern ist nicht zu rechnen, da für den Drehkolben der volle Abstand der Gehäuseschenkel (ca. 55 mm) zur Verfügung steht. Auch ist mit keiner Zeitverzögerung aufgrund des größeren Drehwinkels zu rechnen, da sich durch das verringerte $GD^2$ eine schnellere Drehung erzielen läßt.

In den Zeichnungen sind einige Ausführungsbeispiele der Erfindung wiedergegeben. Es zeigen:

Fig. 1 Ein komplettes Bauteil mit Aufroller, Strammer und Klemmer

Fig. 2 Das Bauteil gem. Fig. 1 nach der Strammung

Fig. 3 Die erfindungsgemäße Gurtstrammertiomponente des Bauteils

Fig. 4 Eine kleine Ausführung mit Doppeldrehkolben

Fig. 5 Eine spezielle Ausbildung des Gurteinzugbereiches

Fig. 6 Eine Kombinationsausführung von Gurtstrammung und Gurtklemmung

Fig. 7 Ein alternativer Antrieb der Antriebswalze

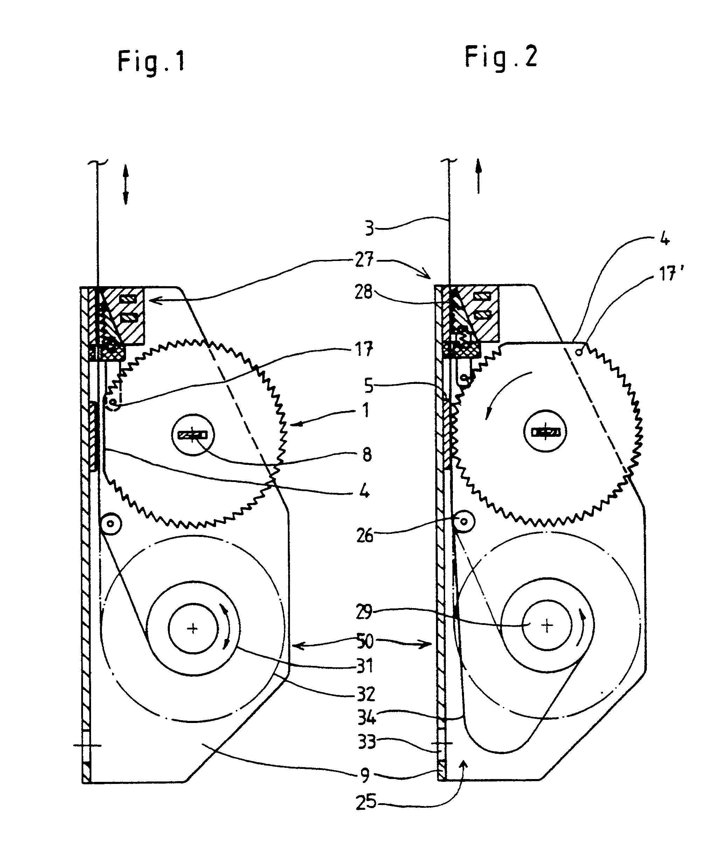

Die Fig. 1 zeigt eine sinnvolle Kombination des erfindungsgemäßen Gurtstrammers 1 mit einem Aufroller 50 und einer Gurtklemmeinheit 27. Das Gurtband 3 verläuft von oben kommend nahezu reibungsfrei durch die Klemmeinheit 27 und einen Führungsspalt 6, der von einer Gegendruckfläche 5 und einer Abflachung 4 der Antriebswalze gebildet wird, zur Aufrollerwelle 29 des Aufrollers 50. Im Unfall wird die pyrotechnische Treibladung in der Antriebstrommel 1 über einen Sensor gezündet. Dabei reißt der Sollbruchstift 17 eines mit dem Klemmkeil 28 verbundenen Stößels, so daß der federbelastete Klemmkeil gegen das Gurtbard 3 zur Anlage kommt. Aufgrund der nach unten gezahnten Sägeverzahnung kann aber das Gurtband 3 leicht nach unten durchgezogen werden.

Die Fig. 2 ziegt den Zustand nach einer Aktivierung des Strammers. Die Antriebstrommel 1 hat sich im Sinne des Pfeiles 30 um etwa 270° gedreht und ist beim Maximum der möglichen Strammleistung zum Stillstand gekommen. das schlagartif eingezogene Gurtband 34 befindet sich zunächst noch im Stauraum 25, bevor es über die etwas träge reagierende Rückholfeder von der Aufrollerwelle 29 aufgewickelt wird. Der federbelastete Klemmkeil 28 arretiert das Gurtband 3 bei Bewegungsumkehr sofort und fängt die volle Unfallast dort ab. Der Aufroller 50 selbst nimmt keine Last auf und kann dementsprechend leicht und kostengünstig gestaltet werden.

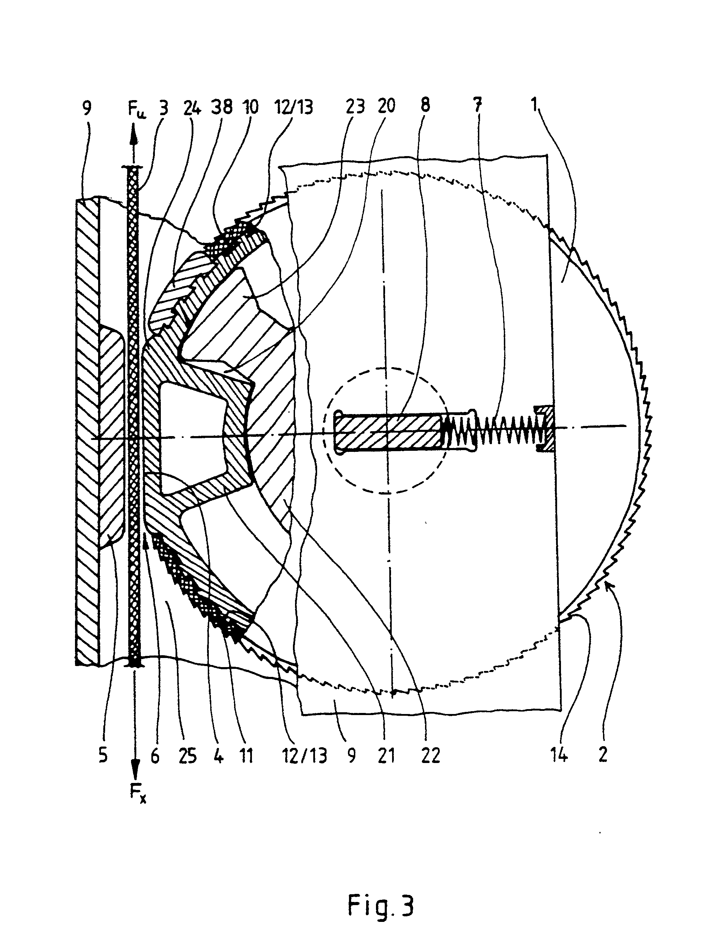

Die Fig. 3 zeigt im Teilschnitt den Aufbau des einstufigen Drehkolbens. Zwischen dem Stator 22 mit seinem Flügel 33 und dem Gegenflügel 21 der Antriebstrommel 1 befindet sich der Expansionsraum 20, der sich im Falle der Aktivierung schlagartig ausdehnt. Im Bereich der Gegendruckfläche 5 weist die Antriebstrommel 1 eine Abflachung 4 auf, so daß sich ein Gurtführungsspalt für den Normalbetrieb ergibt.

Im Falle der Aktivierung dreht sich die Antriebstrommel entgegen dem Uhrzeigersinn und gelangt mit ihrem Andruckpunkt 24 gegen das Gurtband 3. Im weiteren Verlauf der Drehung verschiebt sich die Achse 8 gegen die Wirkung der Feder und das Gurtband 3 kommt zunächst in antreibender Weise mit einem Anlaufgummi 38 in Kontakt. Diese Kontaktphase ist der Strammungsbeginn, der ziemlich abrupt startet. Zur Schonung des Gurtbandes ist deshalb als Anlaufhilfe auf einem kurzen Teilbereich das elastische, reibungsintensive Anlaufgummi 38 vorgesehen. Ihm schließt sich auf der Mantelfläche 2 eine mit einer Verzahnung 14 versehene reibungsintensive Oberfläche 10 an, die das Gurtband während des Strammvorganges schlupffrei und formschlüssig einzeiht.

Der Gurteinzung durch die Drehung der Antriebstrommel 1 erfolgt solange, bis ein Gleichgewicht besteht zwischen der Gurteinzugskraft Fx und dem Gasdruck im Expansionsraum 20'. Die alsdann aufgrund der Unfallbelastung sehr stark ansteigende Gutkraft Fu wird sinnvolerweise von einem oberhalb der Antriebstrommel 1 angeordneten Gurtklemmer 27 aufgenommen, der in der DE-OS 35 44 546 näher beschrieben ist.

Um auf kostengünstige Weise eine wirkungsvolle Verzahnung 14 auf die Mantelfläche 2 zu bringen, wird vorgeschlagen, ein flexibles dünnwandiges Teil (10,11,12,13,14) aus Kunststoff formschlüssig auf dem Umfang der Antriebstrommel 1 anzubringen. Eine wirkungsvolle, sowohl gurtbandschonende als auch griffige (formschlüssige) Verzahnung 14 ist im Anspruch 16 näher gekennzeichnet.

Da die Gurtstrammung schneller vonstatten geht, als die Gurtwelle des unterhalb angeordneten Aufrollers das Gurthband aufwickel kann, staut sich das Gurtband zunächst im Stauraum 25, der bei abgewickelten Gurtband (Insasse angeschnallt) ausreichend groß ist.

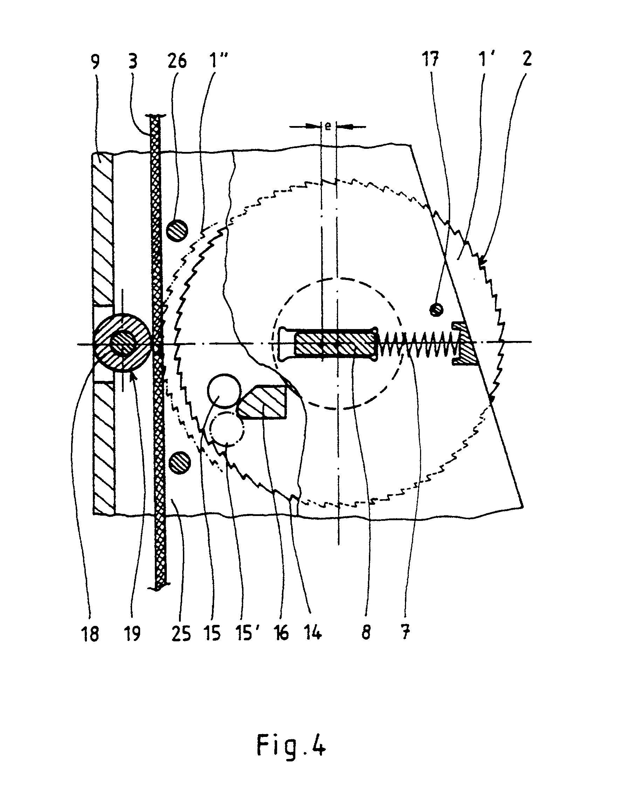

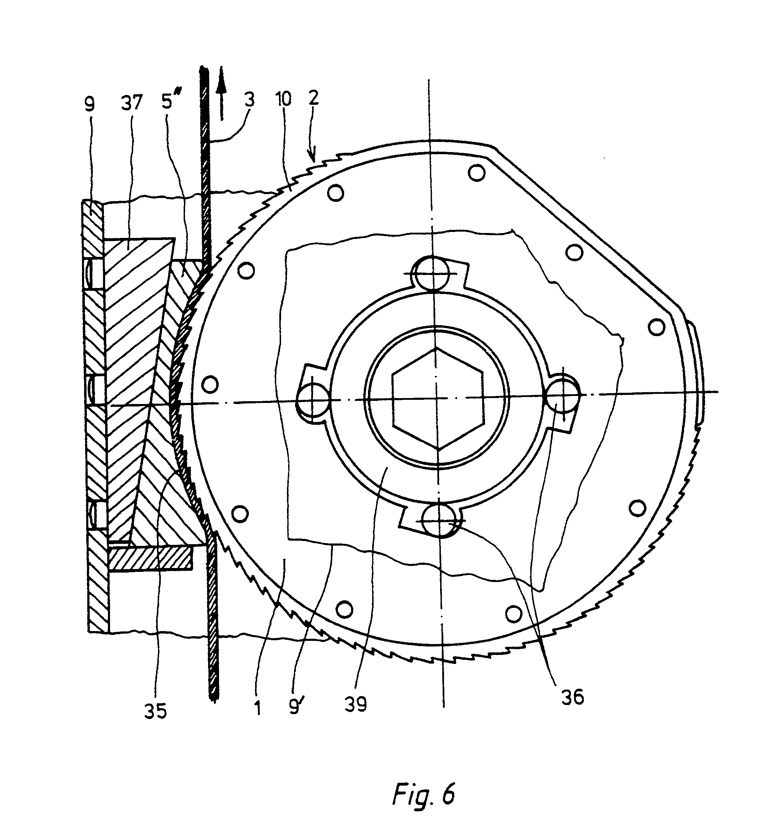

Im maßstäblichen Verhältnis dargestellt, zeigt die Fig. 4 sehr deutlich, um wieviel kleiner die Antriebstrommel 1' ausgelegt werden kann, wenn ein größerer Drehwinkel zur Verfügung steht, um die 180 mm Gurtbandeinzug zu bewerkstelligen. Im Gegensatz zu ca. 72 mm Durchmesser beim einfach wirkenden Drehkolben reduziert sich der Druchmesser auf ca. 40 mm beim doppelt wirkenden Drehkolben. Mit der Reduzierung des Bauvolumens ist auch eine spürbare Gewichtseinsparung verbunden. Die Baukosten sind wegen des etwas aufwendigeren Doppeldrehkolbens verleichbar. Sie liegen aber deutlich unter den Baukosten eines Seilstrammers.

Da bei einer Drehung über 360° die Mantelfläche 2 über dem gesamten Umfang zur Verfügung stehen muß, ist eine andere Art des Gurteingriffs erforderlich. Sie wird über einen Führungsstift 15 an der Antriebstrommel 1 und einer Andruckrampe 16 am Gehäuse 9 bewerkstelligt. Bei noch relativ langsamer Drehung am Beginn der Aktivierung stellt sich somit eine Zwangseinsteuerung in das Gurtband 3 ein. Es erfolgt ein schonender Gurteingriff bei geringem Drehwinkelverlust (15°-20°). Die Positionierung der Ruhestellung und Konservierung der Federkraft 7 übernimmt ein Sollbruchstift 17.

Zur weiteren Reduzierung des Strammungswiderstandes ist statt der Gegendruckfläche 5 eine leichtlaufende Gegendruckrolle 18 im Gehäuse 9 angeordnet.

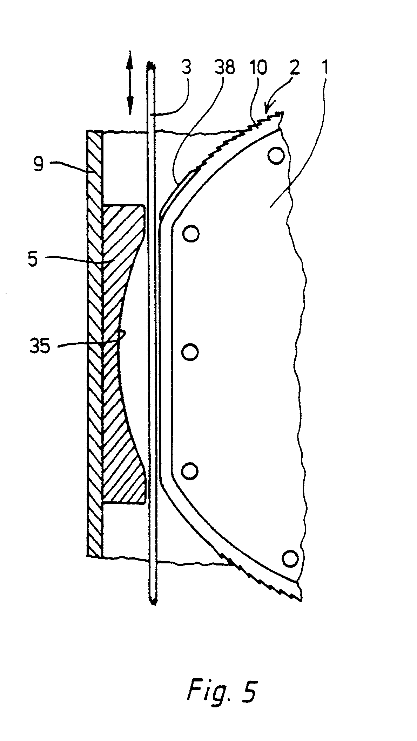

Die Fig. 5 zeigt eine Ausbildung des Gurteinzugbereiches, die besonders effektiv arbeitet. Da sich beim Strammungsvorgang ein zeimlich großer Abschnitt des Gurtbandes 3 im ständigen Kontakt mit der Mantelfläche 2 der Antriebstrommel 1 befindet, liegt nur eine geringe spezifische Gurtbelastung vor. Die Strammung erfolgt schlupffrei und schonend. Erreicht wird dies durch eine Innenwölbung 35 in der Gegendruckfläche 5'. Der Radius der Innenwölbung 35 ist nur etwa eine halbe Gurtbanddicke größer als der Radius der Antriebstrommel 1 über die Zahnspitzen 14 gemessen.

Bei einer Zahnhöhe von etwa 2/3 der Gurtbanddicke ergibt sich somit ein Durchzugsspalt, der etwas breiter als die Gurtbanddicke ist. Durch das Verdrängungsvolumen der in das Gurtband 3 eindringenden Zähne 14 wird der Durchzugsspalt vollständig vom Gurtband ausgefüllt.

Bei dieser Form der Gurtstrammung mit der innengewölbten Gegendruckfläche 5 ist eine verschiebbare und federvorgespannte Antriebstrommelachse 8 nicht mehr erforderlich. Eine fest im Gehäuse 9 angeordnete Welle 39 ist möglich, die zur Gegendruckfläche 5' jedoch eng toleriert sein muß.

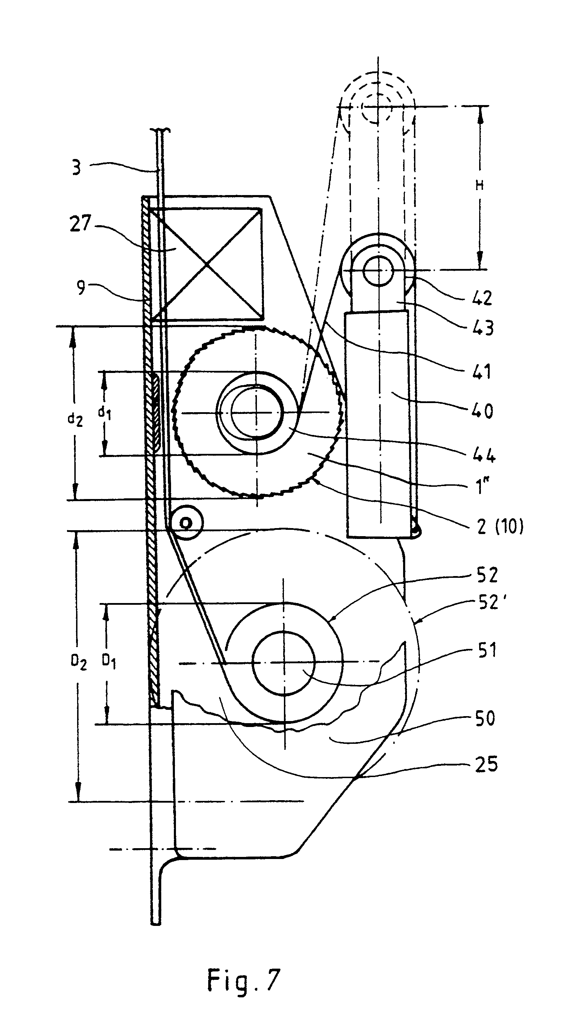

Die Fig. 6 zeigt, wie durch eine Ergänzung mit wenigen, einfachen Komponenten der Gurtstrammer nach erfolgter Gurtstrammung auch als Gurtklemmer genutzt werden kann. Die Gegendruckfläche 5" mit der Innenwölbung 35 ist gegen einen Keil 37 gelagert. Die Wellenstummel 39 der Antriebstrommel 1 sind mit einer Rücklaufsperre (Freilauf) 36 versehen und in den beiden Schenkeln 9' des Gehäuses 9 gelagert. Tritt nach erfolgter Gurtstrammung im Gurtband die Bewegungsumkehr ein, so sperrt die Antriebstrommel 1 durch die Rücklaufsperre 36 sofort. Durch das nach oben ziehende Gurtband 3 wird die Gegendruckfläche 5" gegen den Keil 37 ebenfalls nach oben bewegt. Dies aber nur wenige Millimeter, da das Gurtband 3 zwischen Gehäuse 9, Keil 37, Gegendruckfläche 5" einerseits und der blockierten Antriebstrommel 1 andererseits zusammengepreßt und geklemmt wird. Diese Klemmung hat einen Selbstverstärkungseffekt. Je mehr am Gurtband durch die Unfallast gezogen wird, desto stärker bzw. wirkungsvoller wird die Klemmung.

Eine solche erstmals vorgeschlagene Klemmer-Strammer-Kombination stellt eine äußerst ökonomische Bauweise dar. Ökonomisch hinsichtlich Kosten und Bauvolumen.

In der Fig. 7 schließlich ist eine alternative Antriebsweise für die Antriebstrommel 1 dargestellt. Statt eines Rotationsmotors innerhalb der Antriebstrommel 1 übernimmt ein pyrotechnisch geladener Linearzylinder 40 die Arbeit. Die Fig. 7 zeigt den kompletten Gurtstrammer mit dem Aufroller 50, der darüber angeordneten Antriebstrommel 1' mit dem zugehörigen Arbeitszylinder 40, sowie dem ganz oben am Gurtbandaustritt angeordneten Lastklemmer 27.

Die bisherigen sog. Seilstrammer, z. B. P 32 31 509 wirken über eine Kupplung direkt auf die Aufrollerwelle 51 ein, die jedoch nur einen relativ kleinen Wickeldurchmesser 52 ($D_1$) bei benutztem Sicherheitsgurt aufweist. Um eine bestimmte Menge Gurtband (z.B. 180 mm) einziehen zu können, muß der Arbeitszylinder ziemlich lang ausgeführt werden. Entsprechen groß baut das komplette Gerät.

Bei der vorliegenden Erfindung läßt sich ein relativ kurz bemessener Arbeitszylinder 40 einsetzten, da verschiedene Übersetzungseffekte ausgenutzt werden können. Zunächst einmal kann eine Antriebstrommel 1' mit einem entsprechend großen Durchmeser $d^2$ zur Anwendung gelangen, die nur ca. 1 1/2 Umdrehungen für den Einzug von 180 mm Gurtband ausführen muß. Auf einer mit der Antriebstrommel 1' verbundenen Seiltrommel 44 sind etwa 2 Lagen Seil 41 aufgewickelt. Auch die Seiltrommel 44 mit dem kleineren Durchmesser $d_1$ braucht nur 1 1/2 Umdrehungen zu machen, so daß nur eine relative kurze Seillänge abgezogen zu werden braucht. Entsprechend klein ist der Hub H des Arbeitszylinders 40, so daß er mit einer kleinen Baulänge ausgeführt werden kann.

Im Aktivierungsfall wird das Gurtband 3 durch die rotierende und an das Gurtband angepreßte Antriebstrommel 1' gestrammt. Es wird regelrecht nach unten in den Freiraum 25 "geschossen", wo es sich solange staut, bis die etwas träge wirkende Triebfeder des Aufrollers 50 das Gurtband 3 ordnungsgemäß aufwickelt.

Nach Beendigung der Strammung und - bedingt durch die Belastung - Bewegungsumkehr im Gurtband 3 setzt sofort eine Gurtklemmung im Lastklemmer 27 ein, der die Unfallast dort aufnimmt und in das Gehäuse 9 einleitet.

Alle anderen Komponenten wie Aufroller 50, Antriebstrommel 1 und Arbeitszylinder 40 bleiben lastfrei, so daß ihre Dimensionierung nur auf die Beanspruchung beim Strammvorgang ausgelegt zu werden braucht.

Nach dem heutigen Stand der Erkenntnisse ist die Leistung der Gurststrammung dann in befriedigender Weise bewerkstelligbar, wenn der Antrieb pyrotechnisch ausgelöst wird. Selbstverständlich ist die erfindungsgemäß vorgeschlagen Lösung prinzipiell auch mit anderen Energieerzeugern wirksam. So z.B. auf mechanische Art und Weise mit vorgespannten Federn.

**Patentansprüche**

1. Antriebseinheit für einen Gurtstrammer, der nach Überschreiten einer vorgegebenen Verzögerungsschwelle ausgelöst wird und entweder pyrotechnisch oder mechanisch arbeitet, **dadurch gekennzeichnet,** daß eine in Gurtabzugsrichtung ortsfeste und in Rotationsrichtung antreibbare walzenförmige Antriebstrommel (1) mit einer griffigen Mantelfläche (5) während des Strammvorganges das Gurtband (3) gegen eine Gegendruckfläche (5) presst und das Gurtband (3) durch direkte Übertragung einer rotatorischen Antriebsenergie über die Mantelfläche (5) der Antriebstrommel (1) im Sinne einer Gurtstrammung einzieht.

2. Antriebseinheit nach Anspruch 1, dadurch gekennzeichnet, daß die Antriebstrommel (1) im Bereich des Gurtbandverlaufes eine Abflachung (4) aufweist.

3. Antriebseinheit nach Anspruch 1 oder 2, dadurch gekennzeichnet, daß die Abflachung (4) sich auf einem Winkel von etwa 15° bis 30° erstreckt und mit der gegenüberliegenden Gegendruckfläche (5) einen Gurtführungsspalt (6) bildet, den das Gurtband (3) reibungsarm passieren kann.

4. Antriebseinheit nach einem der Ansprüche 1 bis 3, dadurch gekennzeichnet, daß die Antriebstrommel (1) über eine Feder (7) auf das Gurtband (3) zu vorgespannt ist.

5. Antriebseinheit nach einem der Ansprüche 1 bis 4, dadurch gekennzeichnet, daß die Antriebstrommel (1) über eine Achse (8) rechtwinklig zum Gurtbandverlauf schiebbar in einem Gehäuse (9) angeordnet ist.

6. Antriebseinheit nach einem der Ansprüche 1 bis 5, dadurch gekennzeichnet, daß die Mantelfläche (2) der Antriebstrommel (1) mit einer reibungsintensiven Oberfläche (10) versehen ist.

7. Antriebseinheit nach Anspruch 6, dadurch gekennzeichnet, daß die reibungsintensive Oberfläche (10) aus einer dünnen Wandung (11) aus Kunststoff besteht, die auf der Oberseite mit einer griffigen Verzahnung (14) versehen ist, sowie auf der Unterseite mit einem Feder/Nut-System (12, 13), welches mit einem entsprechenden Feder/Nut-System (12', 13') der Mantelfläche (2) in formschlüssiger Verbindung steht.

8. Antriebseinheit nach einem der Ansprüche 1 bis 7, dadurch gekennzeichnet, daß die Antriebsenergie in der Antriebstrommel (1) auf pyrotechnische Weise in einem ansich bekannten Drehkolben mit ca. 300° Drehwinkel erzeugt wird.

9. Antriebseinheit nach einem der Ansprüche 1 bis 8, dadurch gekennzeichnet, daß die Antriebsenergie in der Antriebstrommel (1) auf mechanische Weise auf einer vorgespannten Feder erzeugt wird und mehrere Umdrehungen der Antriebstrommel (1) gestattet.

10. Antriebseinheit nach einem der Ansprüche 1 bis 9, dadurch gekennzeichnet, daß die Antriebstrommel (1'), wenn sie für einen Drehwinkel über 360° ausgelegt ist, eine vollrunde, griffige Mantelfläche (2) aufweist.

11. Antriebseinheit nach Anspruch 10, dadurch gekennzeichnet, daß die Antriebstrommel (1') über einen Führungsstift (15) verfügt, der im Aktivierungsfall in Zusammenarbeit mit einer gehäusefesten Andruckrampe (16) dafür Sorge trägt, daß die Antriebstrommel (1) sofort in Anlage an das Gurtband (3) gerät.

12. Antriebseinheit nach Anspruch 11, dadurch gekennzeichnet, daß die Antriebstrommel (1) von einem Sollbruchstift (17) in ihrer Ruhelage gehalten wird.

13. Antriebseinheit nach einem der Ansprüche 1 bis 12, dadurch gekennzeichnet, daß die rotierende Antriebstrommel (1) im Aktivierungsfall das Gurtband (3) gegen eine mitlaufende Gegendruckrolle (18) mit gummiartiger Mantelfläche (19) drückt.

14. Antriebseinheit nach einem der Ansprüche 1 bis 13, dadurch gekennzeichnet, daß durch den Drehbeginn der Antriebstrommel (1) im Aktivierungsfall ein oberhalb der Strammereinheit angeordneter Klemm-Mechanismus in Klemmbereitschaft versetzt wird.

15. Antriebseinheit nach Anspruch 6, dadurch gekennzeichnet, daß die Verzahnung (14) auf der reibintensiven Oberfläche (10) aus nebeneinander angeordneten Zähnen besteht, die die Raumform einer Pyramide, eines Tetraeders oder eines Kegels aufweisen, wobei die Zahnhöhe etwa 2/3 der Gurtbanddicke beträgt.

16. Antriebseinheit nach Anspruch 6, dadurch gekennzeichnet, daß der reibintensiven Oberfläche (10) auf der Mantelfläche (2) der Antriebstrommel (1) ein Anlaufgummi (38) im Drehrichtungssinn der Gurtstrammung vorgelagert ist, welches aus einem elastischen Material mit hohem Reibwert besteht.

17. Antriebseinheit nach Anspruch 3, dadurch gekennzeichnet, daß die Gegendruckfläche (5') eine nach innen gewölbte Kontur (35) aufweist, gegen die im Gurtstrammungsfall das Gurtband (3) von der Mantelfläche (2) der Antriebstrommel (1) vollflächig angepaßt wird.

18. Antriebseinheit nach einem der Ansprüche 1 bis 17, dadurch gekennzeichnet, daß mit der Antriebstrommel (1) nach Abschluß der Gurtstrammung selbst eine lastaufnehmende Gurtbandklemmung bewerkstelligt ist.

19. Antriebseinheit nach Anspruch 18, dadurch gekennzeichnet, daß die Antriebstrommel (1) mit einer Rücklaufsperre (36) versehen ist und die mit einer Innenkontur (35) versehende Gegendruckfläche (5) bei Gurtauszug nach einer Gurtstrammung über einen Keil (37) gegen die Antriebstrommel (1) gepreßt wird.

20. Antriebseinheit nach Anspruch 1, dadurch gekennzeichnet, daß die Antriebstrommel (1") durch einen linear wirkenden Arbeitszylinder (40) über ein Seil (41), ein Zahnradgestänge oder sonstige mechanische Übertragungselemente antreibbar ist.

## Claims

1. A driving unit for a belt tensioner which after a predetermined delay threshold has been exceeded, is triggered and which works either pyrotechnically or mechanically, characterised in that a roller-like driving drum (1) which is stationary in the direction of belt pull-off and adapted to be driven in the direction of rotation has a gripping surface (2) which, during the tensioning process, presses the belt (3) against a counter-pressure surface (5), pulling in the belt (3) by direct transmission of a rotary driving energy through the surface (5) of the driving drum (1) to draw the belt taut.

2. A driving unit according to claim 1, characterised in that the driving drum (1) has a flattened surface (4) in the region of belt passage.

3. A driving unit according to claim 1 or 4, characterised in that the flattened surface (4) extends over an angle of about 15° to 30° and forms with the oppositely disposed counter-pressure surface (5) a belt guide gap (6) through which the belt (3) can pass with minimal friction.

4. A driving unit according to one of claims 1 to 3, characterised in that the driving drum (1) is initially tensioned towards the belt (3) by a spring (7).

5. A driving unit according to one of claims 1 to 4, characterised in that the driving drum (1) is disposed in a housing (9) and, via a spindle (8), is capable of sliding at right-angles to the belt passage.

6. A driving unit according to one of claims 1 to 5, characterised in that the surface (2) of the driving drum (1) is provided with a friction - intensive surface (10).

7. A driving unit according to claim 6, characterised in that the friction-intensive surface (10) consists of a thin wall (11) of synthetic plastics material which is provided on the top surface with gripping teeth (14), and on the under side with a tongue-and-groove system (12, 13) which is form-lockingly connected to a corresponding tongue-and-groove system (12', 13') on the surface (2).

8. A driving unit according to one of claims 1 to 7, characterised in that the driving energy is generated in the driving drum (1) in a pyrotechnic manner in a per se known rotary piston with an angle of rotation of approx. 300°.

9. A driving unit according to one of claims 1 to 8, characterised in that the driving energy is generated in the driving drum (1) in a mechanical manner and is passed to a pretensioned spring, permitting of a plurality of rotations of the driving drum (1).

10. A driving unit according to one of claims 1 to 9, characterised in that the driving drum (1'), if it is designed for an angle of rotation of more than 360°, has a frilly-circular gripping surface (2).

11. A driving unit according to claim 10, characterised in that the driving drum (1') has a guide pin (15) which, when activated, ensures in conjunction with a ramp (16) rigid with the housing that the driving drum (1) immediately comes to bear on the belt (3).

12. A driving unit according to claim 11, characterised in that the driving drum (1) is held in its position of rest by a shearing pin (17).

13. A driving unit according to one of claims 1 to 12, characterised in that the rotating driving drum (1), when activated, presses the belt (3) against a co-rotating counter-pressure roller (18) with a rubber-like surface (19).

14. A driving unit according to one of claims 1 to 13, characterised in that in the event of activation, commencement of rotation of the driving drum (1) moves to a state of clamping readiness a clamping mechanism disposed above the tensioning unit.

15. A driving unit according to claim 6, characterised in that the teeth (14) on the friction-intensive surface (10) consist of adjacently disposed teeth which have the spatial form of a pyramid, a tetrahedron or a sphere, the height of the teeth constituting about two-thirds the thickness of the belt.

16. A driving unit according to claim 6, characterised in that the friction-intensive surface (10) on the surface (2) of the driving drum (1) is preceded in the direction of rotation of the belt tensioner by a rubber ramp (38) which consists of an elastic material with a high friction coefficient.

17. A driving unit according to claim 3, characterised in that the counter-pressure surface (5') has a concave contour (35) against which, when the belt is being tensioned, the belt (3) is fully pressed by the surface (2) of the driving drum (1).

18. A driving unit according to one of claims 1 to 17, characterised in that once belt tensioning is completed, the driving drum (1) produces a load-accommodating clamping of the belt.

19. A driving unit according to claim 18, characterised in that the driving drum (1) is provided with a non-return lock (36) while the concavely contoured (35) counter-pressure surface (5), when the belt is pulled out and following tensioning of the belt, is pressed against the driving drum (1) by a wedge (37).

20. A driving unit according to claim 1, characterised in that the driving drum (1") can be driven by a linearly acting working cylinder (40) via a cable (41), a gearwheel linkage or other mechanical transmission elements.

## Revendications

1. Unité d'entraînement pour un tendeur de ceinture de sécurité qui est déclenchée après dépassement d'un seuil prédéterminé de ralentissement et fonctionne soit par pyrotechnie ou mécaniquement, caractérisée en ce que un tambour d'entraînement de forme cylindrique,stationnaire dans le sens d'extraction de la ceinture et pouvant être entraîné en rotation, ayant une surface d'enveloppe antidérapante (5),presse,pendant le processus de tension, la ceinture (3) contre une surface de contre-pression (5) et rétracte la ceinture (3) par transmission directe d'une énergie d'entraînement en rotation par la surface d'enveloppe (5) du tambour d'entraînement (1) dans le sens d'une tension de la ceinture.

2. Unité d'entraînement selon la revendication 1, caractérisée en ce que le tambour d'entraînement (1) présente un aplatissement (4) dans la zone du passage de la ceinture.

3. Unité d'entraînement selon la revendication 1 ou 2, caractérisée en ce que l'aplatissement (4) s'étend sur un angle d'environ 15° à 30° et forme,avec la surface de contre-pression (5) qui lui fait face, une fente (6) de guidage de la ceinture qui laisse passer la ceinture (3) avec peu de frottement.

4. Unité d'entraînement selon l'une des revendications 1 à 3, caractérisée eh ce que le tambour d'entraînement (1) est tendu au préalable vers la ceinture (3) au moyen d'un ressort (7).

5. Unité d'entraînement selon l'une des revendications 1 à 4, caractérisée en ce que le tambour d'entraînement (1) est agencé sur un axe (8),à angle droit par rapport au parcours de la ceinture, mobile dans un boîtier (9).

6. Unité d'entraînement selon l'une des revendications 1 à 5, caractérisée en ce que la surface d'enveloppe (2) du tambour d'entraînement (1) est pourvue d'une superficie (10) à frottement élevé.

7. Unité d'entraînement selon la revendication 6, caractérisée en ce que la superficie (10) à frottement élevé se compose d'une paroi mince (11) en matière synthétique qui est pourvue,à son côté supérieur d'une denture antidérapante (14) et à son côté inférieur,d'un système ressort/ rainure (12, 13),qui est en liaison de forme avec un système ressort/rainure correspondant (12', 13') dans la surface d'enveloppe (2).

8. Unité d'entraînement selon l'une des revendications 1 à 7, caractérisée en ce que l'énergie d'entraînement est produite dans le tambour d'entraînement (1) de manière pyrotechnique,dans un piston rotatif connu ayant un angle de rotation d'environ 300°.

9. Unité d'entraînement selon l'une des revendications 1 à 8, caractérisée en ce que l'énergie d'entraînement est produite dans le tambour d'entraînement (1) de manière mécanique par un ressort tendu au préalable et permet plusieurs rotations du tambour d'entraînement (1).

10. Unité d'entraînement selon l'une des revendications 1 à 9, caractérisée en ce que le tambour d'entraînement (1'), lorsqu'il est agencé pour un angle de rotation supérieur à 360°,présente une surface d'enveloppe (2) totalement ronde et antidérapante.

11. Unité d'entraînement selon la revendication 10, caractérisée en ce que le tambour d'entraînement (1') dispose d'une cheville de guidage (15) qui, lorsqu'elle est activée; permet, en coopération avec une rampe de pression (16) solidaire du boîtier, que le tambour d'entraînement (1) arrive tout de suite en appui contre la ceinture (3).

12. Unité d'entraînement selon la revendication 11, caractérisée en ce que le tambour d'entraînement (1) est maintenu à sa position de repos par une cheville (17) destinée à la rupture.

13. Unité d'entraînement selon l'une des revendications 1 à 12, caractérisée en ce que le tambour rotatif d'entrainement (1),à l'état activé,présse la ceinture (3) contre un rouleau de contre-pression (18) tournant en même temps et ayant une surface d'enveloppe (19) ressemblant à du caoutchouc.

14. Unité d'entraînement selon l'une des revendications 1 à 13, caractérisée en ce que par le début de la rotation du tambour d'entraînement (1) dans le cas où il est activé, un mécanisme de blocage agencé au-dessus de l'unité du tendeur est mis en position prête au blocage.

15. Unité d'entraînement selon la revendication 6, caractérisée en ce que la denture (14) sur la superficie (10) de frottement élevé se compose de dents agencées côte à côte qui présentent la forme d'une pyramide, d'un tétraèdre ou d'un cône, la hauteur des dents représentant environ 2/3 de l'épaisseur de la ceinture.

16. Unité d'entraînement selon la revendication 6, caractérisée en ce que la superficie (10) à frottement élevé sur la surface d'enveloppe du tambour d'entraînement (1) est précédée d'un caoutchouc d'avancement (38) dans le sens de rotation de la tension de la ceinture,qui se compose d'un matériau élastique ayant un coefficient élevé de frottement.

17. Unité d'entraînement selon la revendication 3, caractérisée en ce que la surface de contre-pression (5') présente un contour (35) bombé vers l'intérieur contre lequel, en cas de la tension de la ceinture, la ceinture (3) s'adapte sur toute la surface à partir de la surface d'enveloppe (2) du tambour d'entraînement (1).

18. Unité d'entraînement selon l'une des revendications 1 à 17, caractérisée en ce qu'avec le tambour d'entraînement (1) après la fin de la tension de la ceinture, est réalisé un blocage de la ceinture augmentant avec la charge.

19. Unité d'entraînement selon la revendication 18, caractérisée en ce que la tambour d'entraînement (1) est pourvu d'un blocage anti-retour (36) et la surface de contre-pression (5) pourvue d'un contour interne (35) est préssée, à l'extraction de la ceinture après une tension de la ceinture,au moyen d'une cale (37),contre le tambour (1).

20. Unité d'entraînement selon la revendication 1, caractérisée en ce que le tambour d'entraînement (1″) peut être entraîné par un cylindre à réaction linéaire (40) par l'intermédiaire d'un câble (41), d'une crémaillère ou de tout autre élément mécanique de transmission.

## Fig.1

## Fig.2

9  F_u  3  24  38  10  12/13  23  20  8  7  1

5  F_x  6  25  4  11  12/13  9  21  22  14  2

Fig. 3

Fig.4

*Fig. 6*

Fig. 5

Fig. 7